Europäisches Patentamt

European Patent Office

Office européen des brevets

(19)

(11) Publication number: **0 183 968**
**B1**

# EUROPEAN PATENT SPECIFICATION

(12)

(45) Date of publication of patent specification: **16.01.91**

(51) Int. Cl.⁵: **C 02 F 1/02**

(21) Application number: **85113537.6**

(22) Date of filing: **24.10.85**

(54) **Pure water manufacturing apparatus.**

(30) Priority: **27.10.84 JP 226153/84**

(43) Date of publication of application:
**11.06.86 Bulletin 86/24**

(45) Publication of the grant of the patent:
**16.01.91 Bulletin 91/03**

(84) Designated Contracting States:
**DE FR GB**

(56) References cited:
**DE-A-2 526 674**
**US-A-1 553 067**
**US-A-2 478 144**
**US-A-2 662 508**
**US-A-4 072 610**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Murakami, Kanji c/o Patent Division**
**Kabushiki Kaisha Toshiba 1-1 Shibaura 1-chome**
**Minato-ku Tokyo 105 (JP)**
Inventor: **Konomatu, Yositaka c/o Patent**
**Division**
**Kabushiki Kaisha Toshiba 1-1 Shibaura 1-chome**
**Minato-ku Tokyo 105 (JP)**
Inventor: **Sato, Kanro c/o Patent Division**
**Kabushiki Kaisha Toshiba 1-1 Shibaura 1-chome**
**Minato-ku Tokyo 105 (JP)**

(74) Representative: **Henkel, Feiler, Hänzel & Partner**
**Möhlstrasse 37**
**D-8000 München 80 (DE)**

EP 0 183 968 B1

## Description

The present invention relates to a pure water manufacturing apparatus suitable for the manufacture of ultrapure water used in the electronic and medical drug industries.

Semiconductor devices are becoming increasingly integrated, and patterns on the order of submicrons are required. In view of this, ultrapure water is required. Similarly, in the medical drug industry ultrapure water is required to manufacture high-quality drugs.

From US—A—4 072 610 there is known the production of aqueous solutions of desired concentration for medical purposes which comprises passing water through a reverse osmosis column capable of retaining 100% of pyrogenic materials; and subsequently, in either order, passing the water through a sterilizer capable of eliminating 100% of bacterial material, and admixing, in suitable ratio, the water with a desired material or with a solution of such material of higher concentration than desired to produce said desired concentration solution. According to said document the heat-sterilized solution is passed through a heat exchanger for cooling the solution to a suitable temperature level. There is no disclosure of a particular arrangement of a heat sterilizing heat exchanger/filter/cooling heat exchanger included in an apparatus for manufacturing ultrapure water with which the present invention is concerned.

From US—A—2 662 508 there is known a technique of continuously supplying piped heat-sterilized water for household, hospital and other uses. Thus, even this document is irrelevant as to the manufacture of ultrapure water. Apart therefrom it is disclosed that the heat-sterilized water is cooled by heat exchangers, a filter being arranged at the passageway of the cooled sterilized water.

Finally, Japanese patent disclosure no. 54-34545 discloses an apparatus for manufacturing ultrapure water. Using this apparatus, ultrapure water is manufactured by having a circulation system consisting of an agglomerating/clarifying apparatus, a filtration apparatus, an ultraviolet sterilization apparatus, an ion exchanger, and a heat exchanger for heating and sterilizing pure water. In this system, when water is sufficiently pure with respect to live bacteria, heat exchange at the heat exchanger is not performed, and pure water passing through the filter is supplied to a terminal device at which pure water is required.

However, when the number of live bacteria in pure water flowing in the circulation system exceeds a predetermined level, the valve is closed to stop supply of untreated water. Pure water is then circulated by a pump and heated to 80°C or higher by the heat exchanger, and sterilized.

The number of live bacteria in the pure water circulation system of a pure water manufacturing apparatus varies in accordance with external conditions, e.g., summer or winter time. Anyway, the number of live bacteria exponentially increases even after sterilization. Therefore, when the number of live bacteria in pure water exceeds a predetermined level (normally, 5 to 20/ml), sterilization must be performed immediately.

In such a conventional pure water manufacturing apparatus, the time required for sterilizing pure water varies depending upon the capacity of the sterilizing heat exchanger, the volume of the overall system, system design, and operating conditions such as sterilization temperature. However, it normally takes 3 to 7 hours due to various operations required for switching valves, heating the water and circulating the heated water. When pure water is required for use at the terminal device during the sterilization operation, only hot pure water is available. When the use of hot pure water is undesirable, the terminal device must be stopped until the pure water cools. In a manufacturing line which requires cooler water of about 35°C or lower as in the case of a semiconductor manufacturing line, the entire line must be stopped during sterilization of pure water. It could be thought that if a person skilled in the art wishes to have a supply of cool ultrapure water also during sterilization, it might be obvious to provide means to lead hot water from the steriliser to a cooler and hence to a point of use. This solution of the problem would have the drawback that the water at the point of use would not be filtered and thus might contain dead bacterial material.

The time required for live bacterial to exceed in number a predetermined level is from 2 days to one month depending upon external conditions. Assuming that the manufacturing line must be stopped for sterilization on an average of once in ten days, the line capacity falls to 90% of its maximum capacity. When a manufacturing line of an annual productivity of ten million dollars is assumed, the annual productivity of the line is reduced to 9 million, resulting in a loss of one million dollars.

The present invention has been made in consideration of this, and has, as its object, to provide a pure water manufacturing apparatus which does not require stoppage of a terminal device during a high temperature sterilization operation, and which allows for a maximum manufacturing capacity of the terminal device manufacturing line, ensuring at the same time, that the cool water is free from bacteria.

In order to achieve the above object there is provided a pure water manufacturing apparatus, comprising

a pure water storage tank connected to a primary pure water manufacturing apparatus comprising an agglomeration/clarifying apparatus, an ultraviolet sterilization apparatus, and an ion exchanger, and supplied with primarily treated water therefrom;

a heat exchanger for performing thermal sterilization, arranged downstream of the tank;

a filter for removing bacteria, arranged immediately downstream of the heat exchanger;

a drive means for circulating pure water through a pure water circulation system which includes said pure water storage tank, said heat exchanger for performing thermal sterilization, and said filter; and

a heat exchanger for cooling the pure water disposed between said filter and a terminal device in which ultrapure water is consumed.

In the pure water manufacturing apparatus according to the present invention, the pure water heat exchanger is arranged at the downstream side of the dead bacteria filter, and pure water is sufficiently cooled to a temperature suitable for use at the terminal device. Therefore, even during the sterilization operation of pure water, the operation of the terminal device need not be interrupted, and a maximum production capacity of the terminal device can be guaranteed.

Furthermore, according to the invention, the filter is arranged immediately downstream of the heat exchanger for thermal sterilization. Because of this particular arrangement, the heat exchanger itself is exposed to high temperatures so as to promote the sterilizing efficiency and, at the same time, to effectively prevent the filter plugging. It should be noted that the filter for preventing the bacteria mixing has very fine meshes and, thus, is formed of an organic material in general. It is important to note that the bacteria, whether they are alive or dead, are more easily attached to an organic filter than to an inorganic filter. The live bacteria attached to the organic filter eat the dead bacteria so as to achieve a rapid proliferation. In the present invention, the filter itself is exposed to high temperatures so as to prevent bacteria from being attached to and proliferated on the filter. Naturally, it is possible to effectively suppress the increase in the number of bacteria. It is also possible to markedly suppress the plugging of the filter. If the positions of the filter and the heat exchanger for sterilization are reversed, however, it is impossible to obtain the particular effect of the present invention.

This invention can be more fully understood from the following detailed description when taken in conjunction with the accompanying drawings, in which:

Fig. 1 is a flow chart of a pure water manufacturing apparatus according to an embodiment of the present invention; and

Fig. 2 is a flow chart of a pure water manufacturing apparatus according to another embodiment of the present invention.

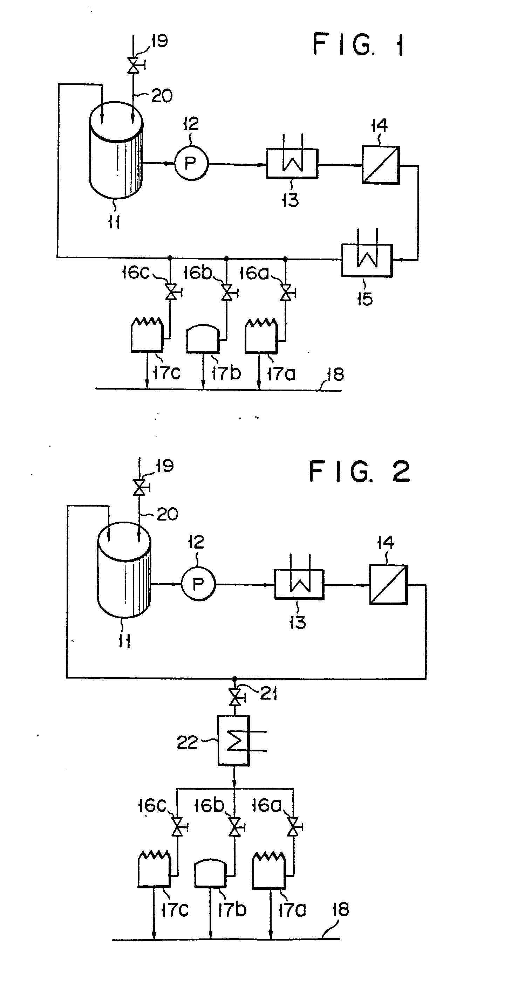

The preferred embodiment of the present invention will be described with reference to Fig. 1. Fig. 2 shows another embodiment wherein three terminal devices (e.g., semiconductor manufacturing lines) are connected.

Referring to Fig. 1, pure water in a tank 11 is circulated by a pump 12 in a circulation system consisting of an autoclave sterilizing heat exchanger 13, a dead bacteria filter 14, and a cooling heat exchanger 15. When pure water is sufficiently pure with respect to live bacteria, heat exchange by the heat exchangers 13 and 15 is not performed. Pure water passing through the filter 14 and the heat exchanger 15 is supplied to terminal devices 17a, 17b and 17c through valves 16a, 16b and 16c, respectively. Exhaust water from the respective devices flows to an exhaust line 18. Un-used pure water is returned to the tank 11. pretreated water, in an amount corresponding to the amount of pure water required at the devices 17a, 17b and 17c, is supplied to the tank 11 through a supply pipe 20 with a valve 19 from a primary pure water manufacturing apparatus comprising an agglomerating/clarifying apparatus, a filtration apparatus, an ultraviolet sterilization apparatus, an ion exchanger and the like. When the number of live bacteria in pure water flowing in the circulation system exceeds a predetermined level, the pure water is heated to 60 to 90°C by the heat exchanger 13 while it is circulated by the pump 12, as in normal operation. Pure water passing through the filter 14 is cooled by the heat exchanger 15 to a temperature at which it is normally used at the devices 17a, 17b and 17c. The cooled pure water is then supplied to the terminal devices 17a, 17b and 17c through the valves 16a, 16b and 16c.

In this apparatus, the terminal devices 17a, 17b and 17c need not be stopped during the sterilization operation, and maximum production capacity of the manufacturing line can be realized.

In this embodiment, the cooling heat exchanger 15 is arranged at the downstream side of the filter 14 so as to partially constitute the circulation system of pure water. However, the arrangement need not be limited to this, and an arrangement as shown in Fig. 2 can be used. In the pure water manufacturing apparatus shown in Fig. 2, the pure water circulation system consists of the tank 11, the pump 12, the heat exchanger 13 and the filter 14. A valve 21 and a cooling heat exchanger 22 are inserted between the pipe downstream of the filter 14 and the terminal manufacturing line. In this apparatus, the same effect as that obtained with the apparatus shown in Fig. 1 can be obtained.

In the pure water manufacturing apparatus according to the present invention, normal temperature pure water can be supplied without requiring stoppage of terminal manufacturing lines even during thermal sterilization of pure water, such that maximum production capacity of the lines can be realized.

**Claims**

1. A pure water manufacturing apparatus, comprising:

a pure water storage tank (11) connected to a primary pure water manufacturing apparatus comprising an agglomeration/clarifying apparatus, an ultraviolet sterilization apparatus, and an ion exchanger, and supplied with primarily treated water therefrom;

a heat exchanger (13) for performing thermal sterilization, arranged downstream of the tank (11);

a filter (14) for removing bacteria, arranged immediately downstream of the heat exchanger;

a drive means (12) for circulating pure water through a pure water circulation system which includes said pure water storage tank (11), said heat exchanger (13) for performing thermal sterilization, and said filter (14); and

a heat exchanger (15 or 22) for cooling the pure water disposed between said filter (14) and a terminal device (17) in which ultrapure water is consumed.

2. An apparatus according to claim 1, characterized in that said terminal device (17) is a semiconductor manufacturing line.

3. An apparatus according to claim 1, characterized in that the heat exchanger (15) for cooling the pure water is inserted in said pure water circulation system.

4. An apparatus according to claim 1, characterized in that the heat exchanger (22) for cooling the pure water is arranged outside said pure water circulation system.

**Patentansprüche**

1. Vorrichtung zum Erzeugen von reinem Wasser, umfassend.

einen Reinwasser-Speicherbehälter (11), der mit einer primären Reinwasser-Erzeugungsvorrichtung mit einer Agglomerier/Klärvorrichtung, einer Ultraviolett-Sterilisiervorrichtung undeinem Ionenaustauscher verbunden ist und mit primär behandeltem Wasser von dieser gespeist wird,

einen dem Speicherbehälter (11) nachgeschalteten Wärmetauscher (13) zur Durchführung einer thermischen Sterilisierung,

ein dem Wärmetauscher unmittelbar nachgeschaltetes Filter (14) zum Beseitigen von Bakterien,

eine Antriebseinheit (12) zum Umwälzen von reinem Wasser durch ein Reinwasser-Umwälzsystem, welches den Reinwasser-Speicherbehälter (11), den Wärmetauscher (13) für thermische Sterilisierung und das Filter (14) umfaßt, und

einen zum Kühlen des reinen Wassers dienenden Wärmetauscher (15 oder 22), der zwischen dem Filter (14) und einer Endeinrichtung (17), in welcher ultrareines Wasser verbraucht wird, angeordnet ist.

2. Vorrichtung nach Anspruch 1, dadurch gekennzeichnet, daß die Endeinrichtung (17) eine Halbleiter-Herstellungsstraße ist.

3. Vorrichtung nach Anspruch 1, dadurch gekennzeichnet, daß der Wärmetauscher (15) zum Kühlen des reinen Wassers in das Reinwasser-Umwälzsystem eingeschaltet ist.

4. Vorrichtung nach Anspruch 1, dadurch gekennzeichnet, daß der Wärmetauscher (22) zum Kühlen des Reinwassers außerhalb des Reinwasser-Umwälzsystems angeordnet ist.

**Revendications**

1. Appareil de fabrication d'eau pure, comprenant:

un réservoir (11) de stockage d'eau pure raccordé à un appareil primaire de fabrication d'eau pure comprenant un appareil d'agglomération-clarification, un appareil de stérilisation par les ultraviolets et un échangeur d'ions, le réservoir recevant de l'eau traitée de façon primaire de cet appareil,

un échangeur de chaleur (13) destiné à assurer la stérilisation thermique et disposé en aval du réservoir (11),

un filtre (14) destiné à retirer les bactéries et placé juste en aval de l'échangeur de chaleur,

un dispositif d'entraînement (12) destiné à faire circuler l'eau pure dans un circuit de circulation d'eau pure qui comprend le réservoir (11) de stockage d'eau pure, l'échangeur de chaleur (13) destiné à assurer la stérilisation thermique, et le filtre (14), et

un échangeur de chaleur (15 ou 22) destiné à refroidir l'eau pure et placé entre le filtre (14) et un dispositif terminal (17) qui consomme l'eau ultrapure.

2. Appareil selon la revendication 1, caractérisé en ce que le dispositif terminal (17) est une installation de fabrication de semi-conducteur.

3. Appareil selon la revendication 1, caractérisé en ce que l'échangeur de chaleur (15) destiné à refroidir l'eau pure est introduit dans le circuit de circulation d'eau pure.

4. Appareil selon la revendication 1, caractérisé en ce que l'échangeur de chaleur (22) destiné à refroidir l'eau pure est placé en dehors du circuit de circulation d'eau pure.

FIG. 1

FIG. 2